# EUROPEAN PATENT APPLICATION

(11) **EP 4 109 848 A1**
(43) Date of publication of application: **28.12.2022**
(21) Application number: 21851068.3
(22) Date of filing: 13.07.2021
(51) Int. Cl.: H04L 45/28

(54) **PRESET PATH INFORMATION OBTAINING METHOD, ENTITY, SERVICE CONTROL UNIT, AND STORAGE MEDIUM**

(30) Priority: 27.07.2020 CN 202010731847
(71) Applicant: ZTE Corporation, Shenzhen, Guangdong 518057 (CN)
(72) Inventor: LUO, Chun, Shenzhen, Guangdong 518057 (CN); XU, Wei, Shenzhen, Guangdong 518057 (CN)
(74) Representative: Zoli, Filippo
(86) International application number: PCT/CN2021/106039
(87) International publication number: WO 2022/022276

(57) **Abstract**

A preset path information obtaining method, an entity, a service control unit, and a storage medium. The preset path information obtaining method comprises: obtaining topology resource information in an ASON and service path information of each service in the ASON (S100); generating a preset path list according to the topology resource information and the service path information of each service, the preset path list comprising preset path information respectively corresponding to different fault scenarios (S200); and determining a service control unit corresponding to the service, and sending the preset path list of the service to the corresponding service control unit, so that the service control unit carries out rerouting recovery according to the preset path information in a situation that a fault scenario is determined (S300).

## Description

### CROSS-REFERENCE TO RELATED APPLICATION

This application is filed on the basis of Chinese patent application No. 202010731847.2 filed July 27, 2020, and claims priority to the Chinese patent application, the entire contents of which are incorporated herein by reference.

### TECHNICAL FIELD

Embodiments of the present disclosure relate to, but not limited to, the field of transport network communications, and more particularly, to a method for obtaining preset path information, an entity, a service control unit, and a storage medium.

### BACKGROUND

With the continuous development of Automatically Switched Optical Network (ASON) technology, network topology and service deployment are becoming more and more complex. During operation, a link fault leads to service interruption. Generally, to speed up the rerouting recovery, preset paths of services are calculated in advance, and when a link fault occurs, the preset path corresponding to the service is selected for rerouting recovery. However, an ASON generally bears multiple services from different origins. The preset paths of different services are likely to use the same topology resource information. As a result, rerouting recovery of some services fails, and routes need to be obtained again, leading to an unduly long service interruption, and affecting the normal operation of the ASON.

### SUMMARY

The following is a summary of the subject matter set forth in the description. This summary is not intended to limit the scope of protection of the claims.

Embodiments of the present disclosure provide a method for obtaining preset path information, an entity, a service control unit, and a storage medium.

In accordance with an aspect of the present disclosure, an embodiment provides a method for obtaining preset path information, applied to an entity in an ASON. The method includes: obtaining topology resource information in the ASON and service path information of each service in the ASON; generating a preset path list according to the topology resource information and the service path information of each service, where the preset path list includes preset path information respectively corresponding to the service in different fault scenarios; and determining a service control unit corresponding to the service, and sending the preset path list of the service to the corresponding service control unit, so that the service control unit performs rerouting recovery according to the preset path information in response to determination of a fault scenario.

In accordance with another aspect of the present disclosure, an embodiment provides a method for obtaining preset path information, applied to a service control unit in an ASON. The method includes: receiving a preset path list sent by an entity in the ASON, where the preset path list includes fault scenarios and preset path information corresponding to the fault scenarios; in response to a determination that a current service path is faulty, determining a currently faulty link, determining a current fault scenario according to the currently faulty link, and obtaining the preset path information corresponding to the current fault scenario from the preset path list; and performing rerouting recovery according to the preset path information.

In accordance with another aspect of the present disclosure, an embodiment provides an entity. The entity includes: a memory, a processor, and a computer program stored in the memory and executable by the processor which, when executed by the processor, causes the processor to implement the method for obtaining preset path information.

In accordance with another aspect of the present disclosure, an embodiment provides a service control unit. The service control unit includes: a memory, a processor, and a computer program stored in the memory and executable by the processor which, when executed by the processor, causes the processor to implement the method for obtaining preset path information.

In accordance with another aspect of the present disclosure, an embodiment provides a computer-readable storage medium storing computer-executable instructions which, when executed by a processor, cause the processor to implement the method for obtaining preset path information, or to execute the method for obtaining preset path information.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to explain the technical schemes of the present disclosure.
FIG. 1 is a schematic structural diagram of an ASON configured to execute a method for obtaining preset path information according to an embodiment of the present disclosure;
FIG. 2 is a flowchart of a method for obtaining preset path information applied to an entity in an ASON according to another embodiment of the present disclosure;
FIG. 3 is a flowchart of obtaining preset paths in a method for obtaining preset path information according to another embodiment of the present disclosure;
FIG. 4 is a flowchart of obtaining preset paths in a method for obtaining preset path information according to another embodiment of the present disclosure;
FIG. 5 is a flowchart of obtaining a preset wavelength in a method for obtaining preset path information according to another embodiment of the present disclosure;
FIG. 6 is a flowchart of obtaining a preset path list after rerouting recovery in a method for obtaining preset path information according to another embodiment of the present disclosure;
FIG. 7 is a flowchart of a method for obtaining preset path information applied to a service control unit in an ASON according to another embodiment of the present disclosure;
FIG. 8 is a flowchart of obtaining preset path information in a single-link fault scenario according to another embodiment of the present disclosure;
FIG. 9 is a flowchart of obtaining preset path information in a multi-link fault scenario according to another embodiment of the present disclosure;
FIG. 10 is a flowchart of obtaining preset path information in an SRLG fault scenario according to another embodiment of the present disclosure;
FIG. 11 is a diagram showing a network topology of an ASON in an Example Scenario One according to another embodiment of the present disclosure; and
FIG. 12 is a diagram showing a network topology of an ASON in an Example Scenario Two according to another embodiment of the present disclosure.

### DETAILED DESCRIPTION

To make the objects, technical schemes, and advantages of the present disclosure clearer, the present disclosure is described in further detail in conjunction with accompanying drawings and examples. It should be understood that the specific embodiments described herein are merely used for illustrating the present disclosure, and are not intended to limit the present disclosure.

It should be noted that although functional modules are divided in the schematic diagram of the apparatus and logical sequence have been shown in the flowchart, in some cases, the modules may be divided in a different manner, or the steps shown or described may be executed differently from the orders as shown in the flowcharts. The terms such as "first", "second" and the like in the description, the claims, and the accompanying drawings are used to distinguish similar objects, and are not necessarily used to describe a specific sequence or a precedence order.

The present disclosure provides a method for obtaining preset path information, an entity, a service control unit, and a storage medium. The method for obtaining preset path information includes: obtaining topology resource information in an ASON and service path information of each service in the ASON; generating a preset path list according to the topology resource information and the service path information of each service, where the preset path list includes preset path information respectively corresponding to the service in different fault scenarios; and determining a service control unit corresponding to the service, and sending the preset path list of the service to the corresponding service control unit, so that the service control unit performs rerouting recovery according to the preset path information when a fault scenario is determined. According to the schemes provided in the embodiments of the present disclosure, in a same fault scenario, no resource conflict occurs during rerouting recovery for each service, thereby effectively improving the efficiency of rerouting recovery.

The embodiments of the present disclosure will be further described in detail below with reference to the accompanying drawings.

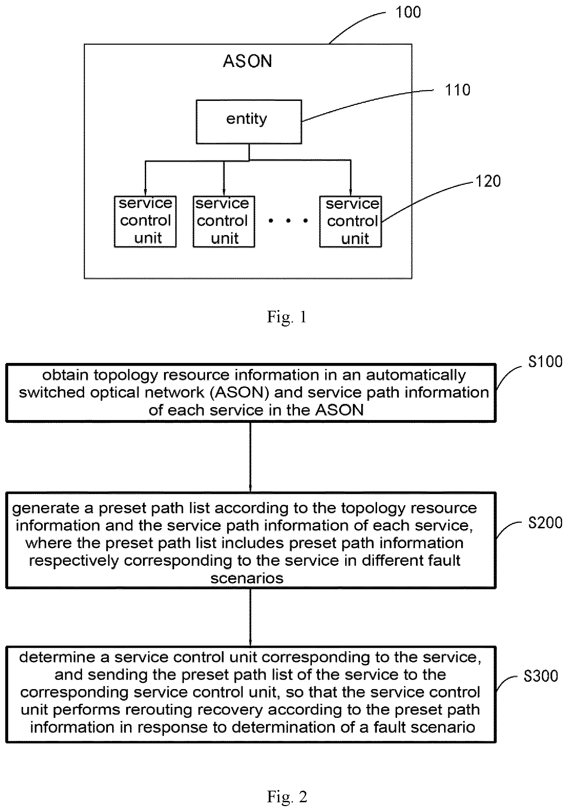

As shown in FIG. 1, FIG. 1 is a schematic diagram of an ASON configured to execute a method for obtaining preset path information according to an embodiment of the present disclosure.

In the example of FIG. 1, an ASON 100 includes an entity 110 and several nodes. Each of the nodes includes a service control unit 120. The entity 110 is communicatively connected to the service control units 120. It should be noted that an existing ASON generally includes a control plane, a management plane, and a transport plane. The entity 110 may be any communication entity in the control plane, as long as the entity can be configured to obtain topology resource information of the entire ASON 100 and service path information of each service in the entire ASON 100, calculate preset paths and generate a preset path list. It should be noted that the entity 110 may be communicatively connected to all the service control units 120 in the ASON in any manner in some cases in the art, as long the delivery of the preset path list can be implemented, which is not limited in the embodiment. It should be noted that the service control unit 120 of each node is configured to perform routing control on a service having the node as a head node. There may be one or more services having the node as the head node, which is not limited in the embodiment.

Those having ordinary skills in the art may understand that the entity 110 and the service control units 120 shown in FIG. 1 do not constitute a limitation to the embodiments of the present disclosure, and more or fewer components than those shown in the figure may be included, or some components may be combined, or a different component arrangement may be used.

Based on the above ASON, embodiments of the method for obtaining preset path information of the present disclosure are proposed below.

As shown in FIG. 2, FIG. 2 is a flowchart of a method for obtaining preset path information which is executed by an entity in an ASON according to an embodiment of the present disclosure. The method for obtaining preset path information includes, but not limited to, steps S100, S200, and S300.

At S100, topology resource information in the ASON and service path information of each service in the ASON is obtained.

In an embodiment, the entity in the ASON may obtain the topology resource information and service path information of the entire network, so that topology resources can be allocated in a centralized manner when preset paths are determined according to the fault scenario. If there are several service groups with independent links in the ASON, the entity may respectively generate preset path information for the corresponding service groups, which will not be repeated here.

In an embodiment, the topology resource information may be any topology resource related to a service path. In order to avoid a resource conflict during rerouting recovery, a specific topology resource type with a conflict risk, such as a link set, may be selected. It should be noted that the service path information may include nodes in a service path of each service and routes between the nodes, for example, an order of the nodes that each service passes through, links selected between every two nodes, etc., which will not be repeated here.

At S200, a preset path list is generated according to the topology resource information and the service path information of each service, where the preset path list includes preset path information respectively corresponding to the service in different fault scenarios.

In an embodiment, the fault scenario may be determined by exhaustive permutation and combination of each link fault, or the fault scenario may be determined according to a probability of a fiber fault in the network, or the fault scenario may be manually specified according to special requirements. The specific manner of determining the fault scenario may be selected according to an actual service requirement of the ASON. It should be noted that there are multiple optical fibers in the ASON. In actual use, if a fiber is faulty, it is probable that another fiber with a high correlation degree is faulty. Therefore, the fault scenario may be determined according to the fiber correlation degree and fault probability. For fibers with a small fault probability, pre-calculation may be omitted to save computing resources. The specific fiber correlation degree and fault probability can be adjusted according to an actual fiber status in the network.

In an embodiment, in a fault scenario, not all services are affected. For services that are not affected, original service paths may be retained in the preset path list. For example, in a fault scenario, the preset path information of a service is left blank, and there may be no need to perform rerouting recovery through the service control unit. The setting method can be adjusted as needed.

At S300, a service control unit corresponding to the service is determined, and the preset path list of the service is sent to the corresponding service control unit, so that the service control unit performs rerouting recovery according to the preset path information when a fault scenario is determined.

In an embodiment, since a service in the ASON is generally controlled by a service control unit of a head node, the head node of each service may be extracted from the service path to determine the corresponding service control unit.

In an embodiment, since the preset path list is generated according to the topology resource information and the service path information of each service, the preset path list includes the preset path information of all the services in the ASON, and the entire preset path list may be sent to the service control units to ensure that the preset path lists in the service control units are the same, so as to ensure that the fault scenarios obtained by matching are the same. Alternatively, according to a specific service controlled by the service control unit, a preset path list corresponding to the specific service may be obtained and sent to the service control unit, to ensure that the preset path list of each service control unit has the same fault scenarios.

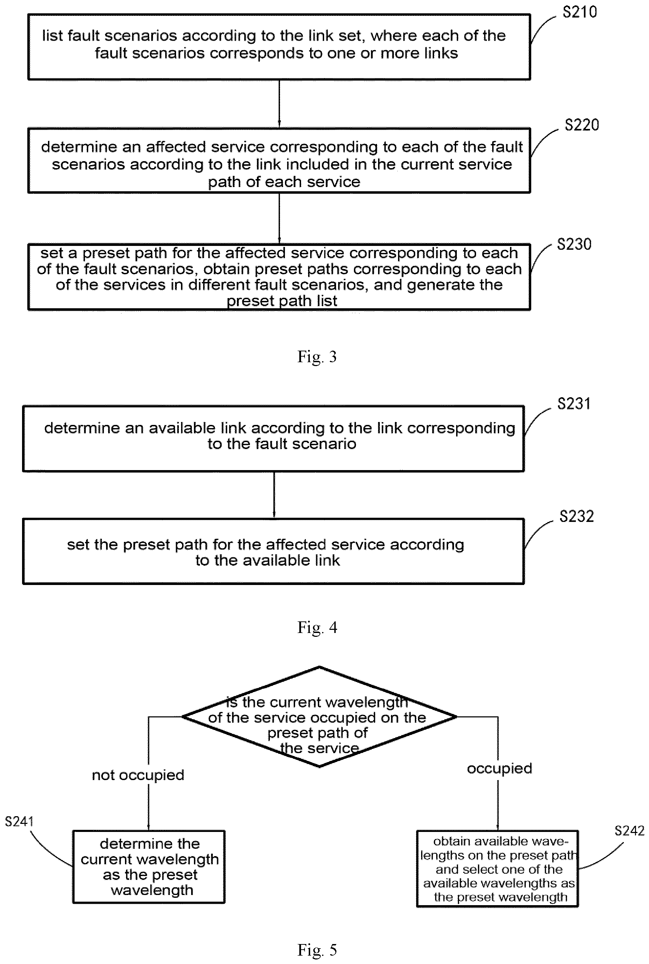

In addition, in an embodiment, the topology resource information includes a link set. The service path information includes a current service path. The preset path information includes a preset path. Referring to FIG. 3, step S200 includes, but not limited to, steps S210, S220, and S230.

At S210, fault scenarios are listed according to the link set, where each of the fault scenarios corresponds to one or more links.

At S220, an affected service corresponding to each of the fault scenarios is determined according to the link included in the current service path of each service.

At S230, a preset path is set for the affected service corresponding to each of the fault scenarios, preset paths corresponding to each of the services in different fault scenarios are obtained, and the preset path list is generated.

It should be noted that the link set in the embodiment is a set of all links in the ASON. When the fault scenarios are listed, it is ensured that each service has at least one available preset path. Rerouting recovery performed when there is no available path for the service due to a link fault is not within the scope of discussion in the embodiment, and the details will not be described herein again.

In an embodiment, a link in a fault scenario may be any one or more links in the topology of the ASON. The positional relationship between multiple links is not limited in the embodiment. A specific link may be selected according to a requirement on the fault scenario.

In an embodiment, the number of affected links in the service path of each service may be any value, which is not limited in the embodiment. It should be noted that the affected service may be determined by traversing the service path of each service, and when the service path of a service includes a link in a fault scenario, the service can be determined as an affected service. Alternatively, according to a link in a fault scenario, a service using the link may be found by matching. The method may be adjusted as needed.

In an embodiment, in each fault scenario, any number of preset paths may be set for the affected service, which is not limited in the embodiment, as long as it is ensured that the preset paths of each service use non-conflicting topology resources. It should be noted that the preset path list may be generated according to a correspondence between preset paths and fault scenarios, and multiple fault scenarios in the preset path list are different. When a fault occurs in the network, the preset paths of each service that do not conflict with each other may be read from the preset path list according to the failure scenario, thereby improving the efficiency of service rerouting recovery.

In addition, referring to FIG. 4, in an embodiment, S230 includes, but not limited to, steps S231 and S232.

At S231, an available link is determined according to the link corresponding to the fault scenario.

At S232, a preset path is set for the affected service according to the available link.

In an embodiment, at S231, the link corresponding to the fault scenario may be set as a faulty link, and links other than the faulty link are obtained from the link set of the topology resource information as available links. It should be noted that cases where no available link can be obtained for the affected service are not within the scope of discussion in the embodiment, and only cases where a preset path can be obtained are discussed in the embodiment, so the details will not be described here.

In an embodiment, a policy constraint may be set as needed, and the preset path information may be calculated according to the available links. For example, when there are multiple available links between two nodes, a specific path is determined according to a shortest path principle or a minimum cost principle. The above calculation may be performed using methods in some cases in the art, as long as a preset path can be set for the affected service. The specific calculation method is not an improvement made by the embodiment, so the details will not be described here.

In addition, in an embodiment, the service path information further includes a current wavelength. The preset path information further includes a preset wavelength. Referring to FIG. 5, S200 includes, but not limited to, step S241 or S242.

At S241, the current wavelength is determined as the preset wavelength when the current wavelength of the service is not occupied on the preset path of the service.

At S242, available wavelengths on the preset path are obtained and one of the available wavelengths is selected as the preset wavelength when the current wavelength of the service is occupied on the preset path of the service.

In an embodiment, in a link of the same ASON, if at least two services apply for the same wavelength, generally the service that applies earlier obtains the wavelength and performs subsequent rerouting recovery, and the service that applies later may to re-obtain a preset path because the wavelength is already occupied, affecting the efficiency of rerouting. Based on this, when obtaining preset path information, each service may sequentially detect a wavelength occupation status in a new link. When the current wavelength of the service is not occupied, the original wavelength is retained, that is, the current wavelength is set as the preset wavelength. When the current wavelength of the service is occupied, one of the available wavelengths is selected as the preset wavelength. It should be noted that since each wavelength in a link can only be used to carry one service, an available wavelength, once selected as the preset wavelength for a service, will be removed from the available wavelengths, so that this available wavelength will no longer be selected by a next service. It can be understood that the preset wavelengths may be obtained sequentially for each service to ensure that the wavelengths do not conflict with each other, or other methods may also be used to obtain the preset wavelengths. For example, a non-conflicting wavelength set is set for each service, and different wavelengths are selected from the wavelength set for different preset paths. The method may be selected as needed.

In addition, in an embodiment, the fault scenarios include at least one of:
a single-link fault;
a multi-link fault; or
an SRLG fault.

In an embodiment, the single-link fault is a scenario where one of the links in the ASON is faulty, the multi-link fault is a scenario where at least two links are faulty, and the SRLG means that when one link is faulty, probably several other links are also faulty. The SRLG may be set when the ASON is initialized for use, or may be dynamically adjusted according to a fault probability of a fiber in actual use, which is not limited in the embodiment as long as the SRLG can be used to determine the fault scenario.

It should be noted that, if a link belongs to an SRLG, there may be no need to set a single-link fault according to the link, so as to avoid waste of resources.

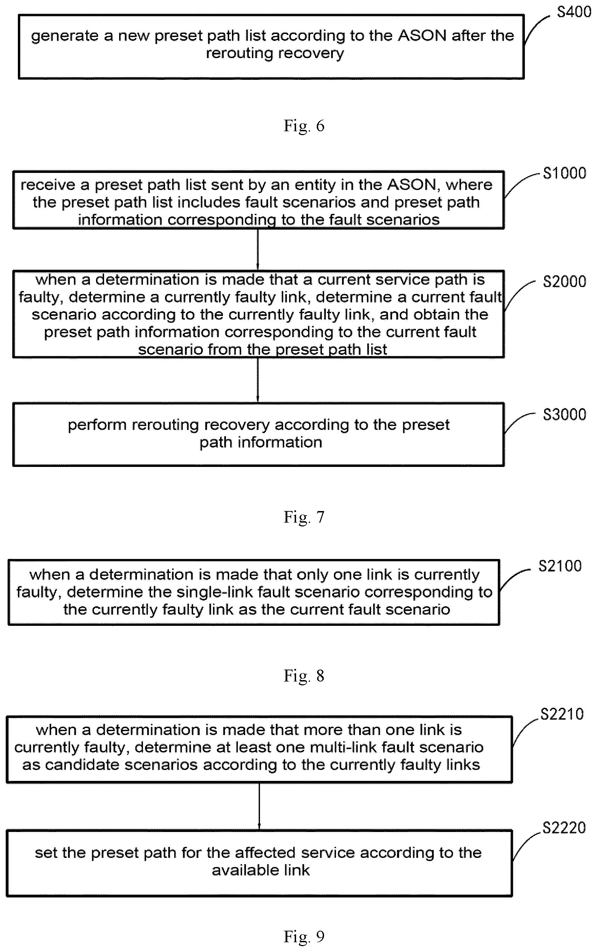

In addition, referring to FIG. 6, in an embodiment, after S300 is executed, the method further includes, but not limited to, a step S400.

At S400, a new preset path list is generated according to the ASON after the rerouting recovery.

In an embodiment, since the service path information and topology resource information of the ASON are changed after the rerouting recovery, a new preset path list may be generated according to the above steps S100 to S300 after the rerouting recovery to avoid link faults. Those having ordinary skills in the art can understand that a new preset path list may also be generated when a path of a service is changed, as long as it can be ensured that the preset path information in the preset path list corresponds to the current service path information.

As shown in FIG. 7, FIG. 7 is a flowchart of a method for obtaining preset path information executed by a service control unit in an ASON according to an embodiment of the present disclosure. The method for obtaining preset path information includes, but not limited to, steps S1000, S2000, and S3000.

At S1000, a preset path list sent by an entity in the ASON is received, where the preset path list includes fault scenarios and preset path information corresponding to the fault scenarios.

In an embodiment, the entity in the ASON generates the preset path list and sends the preset path list to the service control unit in real time, so that rerouting recovery can be performed directly according to the preset path list when a fault occurs. It can be understood that in order for the entity to generate a new preset path list after rerouting recovery, the service control unit may send completion information to the entity after the rerouting recovery is completed, and the entity generates the new preset path list after obtaining the completion information of all service control units. Other methods may also be used to identify the completion of the rerouting recovery, which will not be detailed here.

In an embodiment, for a correspondence between fault scenarios and preset path information in the preset path list, reference may be made to the embodiment shown in FIG. 2, and the details will not be repeated here.

At S2000, when a determination is made that a current service path is faulty, a currently faulty link is determined, a current fault scenario is determined according to the currently faulty link, and the preset path information corresponding to the current fault scenario is obtained from the preset path list.

In an embodiment, since a service cannot run normally after a link fault, the service may sense the fault to trigger the process of obtaining preset path information. It should be noted that the current faulty link described in the embodiment may be faulty links in the entire ASON, so that each service control unit can find the same fault scenario by matching, to ensure that the preset paths used do not conflict with each other.

In an embodiment, when a link becomes faulty, not all services require rerouting recovery, and the current service path of the service may be retained in the preset path list. The specific setting method may be selected as needed.

At S3000, rerouting recovery is performed according to the preset path information.

In an embodiment, since the ASON may have multiple service control units and after rerouting recovery of a service of one service control unit, the preset path used may conflict with service paths of other service control units, all the service control units may obtain preset path information according to the same fault scenario when a service becomes faulty, so as to ensure that the service paths of the services do not conflict with each other.

In addition, in an embodiment, the fault scenarios include a single-link fault scenario. Referring to FIG. 8, S2000 further includes, but not limited to, a step S2100.

At S2100, when a determination is made that only one link is currently faulty, the single-link fault scenario corresponding to the currently faulty link is determined as the current fault scenario.

In an embodiment, in the single-link fault scenario, only one link is faulty, and the corresponding fault scenario may be determined according to the link, so that the service control unit performs rerouting recovery. It should be noted that after detecting that only one link is faulty, it is further determined whether the link belongs to an SRLG, and if the link does not belong to any SRLG, the current fault scenario is determined according to the faulty link.

In addition, in an embodiment, the fault scenarios include a multi-link fault scenario. Referring to FIG. 9, S2000 further includes, but not limited to, steps S2210 and S2220.

At S2210, when a determination is made that more than one link is currently faulty, at least one multi-link fault scenario is determined as candidate scenarios according to the currently faulty links.

At S2220, one of the at least one candidate scenario is determined as the current fault scenario according to a ratio of a number of the currently faulty links to a number of links corresponding to the multi-link fault scenario.

In an embodiment, the multi-link fault scenario includes at least two faulty links. In the multi-link fault scenario in the preset path list, all links corresponding to the fault scenario may be listed. In an actual matching process, an exact match principle may be used. For example, link 1 and link 2 are faulty, a multi-link fault scenario where both link 1 and link 2 are faulty is obtained as the current fault scenario.

In an embodiment, if the preset path list is generated for only some fault scenarios for the purpose of saving computing resources or to meet actual operation and maintenance requirements, it is very likely that faulty links cannot 100% match a fault scenario. For example, link 1 and link 2 are faulty, but the preset path list does not include a fault scenario where both link 1 and link 2 are faulty. Based on this, first, at least one multi-link fault scenario may be determined as candidate scenarios. For example, fault scenario 1 is a scenario where link 1, link 2, link 3 and link 4 are faulty, fault scenario 2 is a scenario where link 1, link 2 and link 3 are faulty, and fault scenario 1 and fault scenario 2 are determined as candidate scenarios. Then the current fault scenario is determined according to a ratio of the number of faulty links in the number of links corresponding to the multi-link fault scenario. For example, in the above example, link 1 and link 2 account for 2/4 of the number of faulty links in fault scenario 1, and accounts for 2/3 of the number of faulty links in fault scenario 2. In this case, fault scenario 2 may be selected as the current fault scenario based on a maximum match principle. Certainly, the current fault scenario may also be determined based on a first-match principle. For example, if fault scenario 1 is the first result found by matching, fault scenario 1 is determined as the current fault scenario. The specific method may be adjusted as needed.

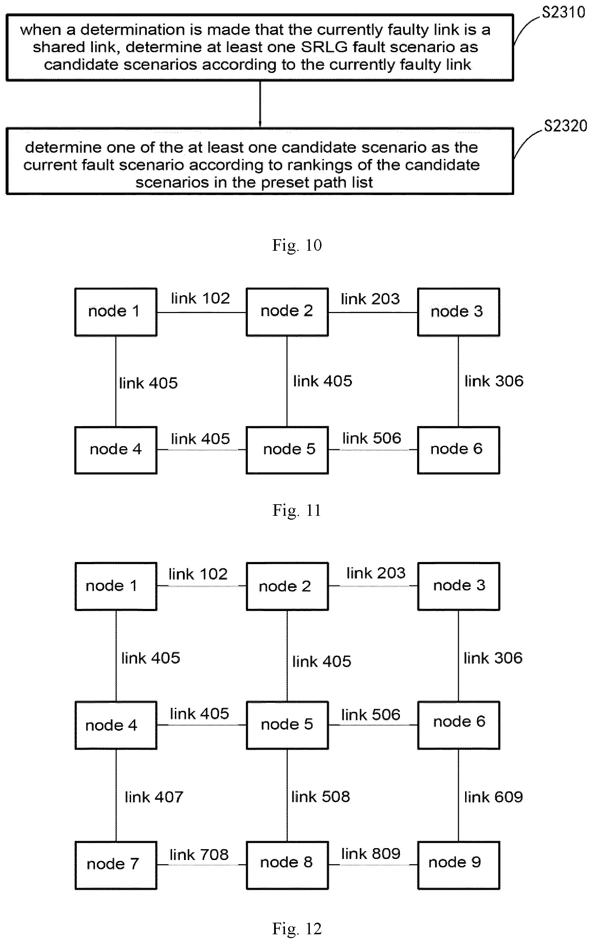

In addition, in an embodiment, the fault scenarios include an SRLG fault scenario. Referring to FIG. 10, S2000 further includes, but not limited to, steps S2310 and S2320.

At S2310, when a determination is made that the currently faulty link is a shared link, at least one SRLG fault scenario is determined as candidate scenarios according to the currently faulty link.

At S2320, one of the at least one candidate scenario is determined as the current fault scenario according to rankings of the candidate scenarios in the preset path list.

In an embodiment, after detecting that a link is faulty, a determination is made as to whether the link belongs to an SRLG. If the faulty link belongs to multiple SRLGs, a method of determining the current fault scenario after determining candidate scenarios is adopted. Reference may be made to the first-match principle or the maximum match principle used in multi-link matching in FIG. 9, and the details will not be repeated here.

The technical scheme of the embodiment is further illustrated below with reference to two specific application scenarios.

### Scenario One: Single-link fault scenario

As shown in FIG. 11, FIG. 11 is a diagram showing a network topology of an ASON according to an embodiment of the present disclosure. An entity in the ASON obtains topology resource information and service path information, as follows:
Nodes: node 1, node 2, node 3, node 4, node 5, node 6;
Links: link 102, link 104, link 203, link 205, link 306, link 405, link 506;
Available wavelengths: λ1 to λ5;
Current path of service 1: node 1, link 102, node 2, link 203, node 3, link 306, node 6, using wavelength λ1;
Current path of service 2: node 4, link 405, node 5, link 506, node 6, link 306, node 3, using wavelength λ1; and
Current path of service 3: node 4, link 405, node 5, link 506, node 6, using wavelength λ2.

By listing the link faults according to the above information, a preset path list shown in Table 1 below is obtained:

**Table 1 Preset path list for single-link fault scenario**

| | Preset path of service 1 | Preset path of service 2 | Preset path of service 3 |
|---|---|---|---|
| link 102 is faulty | ①node 1, link 104, node 4, link 405, node 5, link 205, node 2, link 203, node 3, link 306, node 6, wavelength λ3 | not affected, none | not affected, none |
| link 203 is faulty | ②node 1, link 102, node 2, link 205, node 5, link 506, node 6, wavelength λ3 | ①node 4, link 405, node 5, link 506, node 6, link 306, node 3, wavelength λ4 | not affected, none |
| link 306 is faulty | ③node 1, link 102, node 2, link 205, node 5, link 506, node 6, wavelength λ3 | not affected, none | not affected, none |
| link 405 is faulty | not affected, none | ②node 4, link 401, node 1, link 102, node 2, link 203, node 3, wavelength λ3 | ①node 4, link 401, node 1, link 102, node 2, link 205, node 5, link 506, node 6, wavelength λ4 |
| link 205 is faulty | not affected, none | ③node 4, link 405, node 5, link 506, node 6, link 306, node 3, wavelength λ2 | not affected, none |
| link 506 is faulty | not affected, none | not affected, none | ②node 4, link 405, node 5, link 205, node 2, link 203, node 3, link 306, node 6, wavelength λ3 |

As can be seen from Table 1, the faulty link 102 and faulty link 306 only cause rerouting recovery of service 1, the faulty link 205 only causes rerouting recovery of service 2, and the faulty link 506 only causes rerouting recovery of service 3. Since links λ1 or λ2 on these paths have been used, only λ3 can be allocated for use. However, the faulty link 203 causes rerouting recovery of services 1 and 2. Since all the paths calculated use link 506, wavelength λ3 is used for the preset path corresponding to service 1, and wavelength λ4 is used for the preset path corresponding to service 2, to avoid conflicts between wavelength resources on this link. Similarly, the faulty link 405 causes rerouting recovery of services 2 and 3. To avoid conflicts, wavelengths λ3 and λ4 are used respectively. When other links in the topology are faulty, services 1, 2, and 3 are not affected, so there may be no need to calculate preset paths for the other links. After obtaining the preset path list shown in Table 1, a correspondence between the preset path of each service and fault scenarios is established and delivered to a head node of the service in the ASON. The delivery may be implemented by methods in some cases in the existing technology such as configuring or controlling an interaction message between a server and a device by a network management system, which will not be detailed here. When a fault occurs, for example, when link 203 is faulty, both services 1 and 2 are affected. Rerouting recovery is respectively performed on head node 1 of service 1 and head node 4 of service 2. Preset paths are respectively obtained for services 1 and 2. The preset path found for service 1 is: ②node 1, link 102, node 2, link 205, node 5, link 506, node 6, wavelength λ3. The preset path found for service 2 is: ①node 4, link 405, node 5, link 506, node 6, link 306, node 3, wavelength λ4. After a fault occurs, the network topology is actually changed. For example, after link 203 becomes faulty, this link is no longer available in the network, and the paths of services 1 and 2 are also changed. In this case, a new preset path list may be generated by performing the above steps.

### Scenario Two: SRLG fault scenario

As shown in FIG. 12, FIG. 12 is a diagram showing a network topology of an ASON according to an embodiment of the present disclosure. An entity in the ASON obtains topology resource information and service path information, as follows:
Nodes: node 1, node 2, node 3, node 4, node 5, node 6, node 7, node 8, node 9;
Links: link 102, link 104, link 203, link 205, link 306, link 405, link 407, link 506, link 508, link 609, link 708, link 809;
Available wavelengths: λ1 to λ5;
SRLG1: including link 104 and link 405;
SRLG2: including link 405 and link 407;
Current path of service 1: node 4, link 405, node 5, link 506, node 6, using wavelength λ1; and
Current path of service 2: node 2, link 205, node 5, link 405, node 4, using wavelength λ2.

By listing the SRLG faults according to the above information, a preset path list shown in Table 2 below is obtained:

**Table 2 Preset path list for SRLG fault scenario**

| | Preset path of service 1 | Preset path of service 2 |
|---|---|---|
| SRLG1 fault | ①node 4, link 407, node 7, link 708, node 8, link 508, node 5, link 506, node 6, wavelength λ1 | ①node 2, link 205, node 5, link 508, node 8, link 708, node 7, link 407, node 4, wavelength λ2 |
| SRLG2 fault | ②node 4, link 104, node 1, link 102, node 2, link 205, node 5, link 506, node 6, wavelength λ1 | ②node 2, link 102, node 1, link 104, node 4, wavelength λ2 |

For the method by which the service control unit obtains the preset path list, reference may be made to Scenario One, and the details will not be repeated here.

After link 405 is detected to be faulty, since the link 405 belongs to both SRLG1 and SRLG2, SRLG1 may be selected based on the first-match principle. The specific principle for selection may be adjusted as needed. This scenario takes the SRLG1 fault as an example. When SRLG1 is faulty, both services 1 and 2 are affected. Therefore, the corresponding service control units respectively obtain the corresponding preset paths and perform rerouting recovery. For the process of the rerouting recovery method and the process after recovery, reference may be made to the method in Scenario One, and the details will not be repeated here.

In addition, an embodiment of the present disclosure further provides an entity. The entity includes: a memory, a processor, and a computer program stored in the memory and executable by the processor.

The processor and the memory may be connected by a bus or in other ways.

It should be noted that the entity in the embodiment can constitute a part of the ASON in the embodiment shown in FIG. 1, and these embodiments all belong to the same inventive concept and therefore have the same implementation principle and technical effects, so the details will not be repeated here.

A non-transitory software program and instructions required to implement the method for obtaining preset path information in the above embodiments are stored in the memory which, when executed by the processor, causes the processor to implement the method for obtaining preset path information applied to an entity in the above embodiments, for example, the method steps S100 to S300 in FIG. 2, the method steps S210 to S230 in FIG. 3, the method steps S231 to S232 in FIG. 4, the method step S241 or S242 in FIG. 5, and the method step S400 in FIG. 6.

In addition, an embodiment of the present disclosure further provides a service control unit, including: a memory, a processor, and a computer program stored in the memory and executable by the processor.

The processor and the memory may be connected by a bus or in other ways.

It should be noted that the service control unit in the embodiment can constitute a part of the ASON in the embodiment shown in FIG. 1, and these embodiments all belong to the same inventive concept and therefore have the same implementation principle and technical effects, so the details will not be repeated here.

A non-transitory software program and instructions required to implement the method for obtaining preset path information in the above embodiments are stored in the memory which, when executed by the processor, causes the processor to implement the method for obtaining preset path information applied to a service control unit in the above embodiments, for example, the method steps S1000 to S3000 in FIG. 7, the method step S2100 in FIG. 8, the method steps S2210 to S2220 in FIG. 9, and the method steps S2310 to S2320 in FIG. 10.

The apparatus embodiments described above are merely examples. The units described as separate components may or may not be physically separated, i.e., may be located in one place or may be distributed over a plurality of network units. Some or all of the modules may be selected as needed to achieve the objects of the scheme of this embodiment.

In addition, an embodiment of the present disclosure further provides a computer-readable storage medium, storing computer-executable instructions which, when executed by a processor or controller, for example, by a processor in the control unit embodiment described above, may cause the processor to implement the method for obtaining preset path information applied to an entity in an ASON in the above embodiments, for example, the method steps S100 to S300 in FIG. 2, the method steps S210 to S230 in FIG. 3, the method steps S231 to S232 in FIG. 4, the method step S241 or S242 in FIG. 5, and the method step S400 in FIG. 6; or cause the processor to implement the method for obtaining preset path information applied to a service control unit in an ASON in the above embodiments, for example, execute the method steps S1000 to S3000 in FIG. 7, the method step S2100 in FIG. 8, the method steps S2210 to S2220 in FIG. 9, and the method steps S2310 to S2320 in FIG. 10.

An embodiment of the present disclosure includes: obtaining topology resource information in an ASON and service path information of each service in the ASON; generating a preset path list according to the topology resource information and the service path information of each service, where the preset path list includes preset path information respectively corresponding to the service in different fault scenarios; and determining a service control unit corresponding to the service, and sending the preset path list of the service to the corresponding service control unit, so that the service control unit performs rerouting recovery according to the preset path information when a fault scenario is determined. According to the schemes provided in the embodiments of the present disclosure, in the same fault scenario, no resource conflict occurs during rerouting recovery for each service, thereby effectively improving the efficiency of rerouting recovery.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer readable instructions, data structures, program modules, or other data). The computer storage medium includes, but is not limited to, a random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information passing medium.

Although some implementations of the present disclosure have been described above, the present disclosure is not limited to the implementations described above. Those having ordinary skills in the art can make various equivalent modifications or replacements without departing from the scope of the present disclosure. Such equivalent modifications or replacements fall within the scope defined by the claims of the present disclosure.

## Claims

1. A method for obtaining preset path information, applied to an entity in an Automatically Switched Optical Network (ASON), the method comprising:
obtaining topology resource information in the ASON and service path information of each service in the ASON;
generating a preset path list according to the topology resource information and the service path information of each service, wherein the preset path list comprises preset path information respectively corresponding to the service in different fault scenarios; and
determining a service control unit corresponding to the service, and sending the preset path list of the service to the corresponding service control unit, so that the service control unit performs rerouting recovery according to the preset path information in response to a determination of a fault scenario.

2. The method for obtaining preset path information of claim 1, wherein the topology resource information comprises a link set; the service path information comprises a current service path; the preset path information comprises a preset path; and
generating a preset path list according to the topology resource information and the service path information of each service comprises:
listing fault scenarios according to the link set, wherein each of the fault scenarios corresponds to one or more links;
determining an affected service corresponding to each of the fault scenarios according to the link comprised in the current service path of each service; and
setting a preset path for the affected service corresponding to each of the fault scenarios, obtaining preset paths corresponding to each of the services in different fault scenarios, and generating the preset path list.

3. The method for obtaining preset path information of claim 2, wherein setting a preset path for the affected service corresponding to each of the fault scenarios comprises:
determining an available link according to the link corresponding to the fault scenario; and
setting the preset path for the affected service according to the available link.

4. The method for obtaining preset path information of claim 2, wherein the service path information further comprises a current wavelength; the preset path information further comprises a preset wavelength; and
generating a preset path list according to the topology resource information and the service path information of each service further comprises one of:
determining the current wavelength as the preset wavelength in response to the current wavelength of the service being not occupied on the preset path of the service; or
obtaining available wavelengths on the preset path and selecting one of the available wavelengths as the preset wavelength, in response to the current wavelength of the service being occupied on the preset path of the service.

5. The method for obtaining preset path information of claim 2, wherein the fault scenarios comprise at least one of:
a single-link fault;
a multi-link fault; or
a Shared Risk Link Group (SRLG) fault.

6. The method for obtaining preset path information of claim 1, wherein after the service control unit performs rerouting recovery according to the preset path information in response to a determination of a fault scenario, the method further comprises:
generating a new preset path list according to the ASON after the rerouting recovery.

7. A method for obtaining preset path information, applied to a service control unit in an Automatically Switched Optical Network (ASON), the method comprising:
receiving a preset path list sent by an entity in the ASON, wherein the preset path list comprises fault scenarios and preset path information corresponding to the fault scenarios;
in response to a determination that a current service path is faulty, determining a currently faulty link, determining a current fault scenario according to the currently faulty link, and obtaining the preset path information corresponding to the current fault scenario from the preset path list; and
performing rerouting recovery according to the preset path information.

8. The method for obtaining preset path information of claim 7, wherein the fault scenarios comprise a single-link fault scenario; and
determining a current fault scenario according to the currently faulty link comprises:
in response to a determination that only one link is currently faulty, determining the single-link fault scenario corresponding to the currently faulty link as the current fault scenario.

9. The method for obtaining preset path information of claim 7, wherein the fault scenarios comprise a multi-link fault scenario; and
the determining a current fault scenario according to the currently faulty link comprises:
in response to a determination that more than one link is currently faulty, determining at least one multi-link fault scenario as candidate scenarios according to the currently faulty links; and
determining one of the at least one candidate scenario as the current fault scenario according to a ratio of a number of the currently faulty links to a number of links corresponding to the multi-link fault scenario.

10. The method for obtaining preset path information of claim 7, wherein the fault scenarios comprise a Shared Risk Link Group (SRLG) fault scenario; and
determining a current fault scenario according to the currently faulty link comprises:
in response to a determination that the currently faulty link is a shared link, determining at least one SRLG fault scenario as candidate scenarios according to the currently faulty link; and
determining one of the at least one candidate scenario as the current fault scenario according to rankings of the candidate scenarios in the preset path list.

11. An entity, comprising: a memory, a processor, and a computer program stored in the memory and executable by the processor which, when executed by the processor, causes the processor to carry out the method for obtaining preset path information of any one of claims 1 to 6.

12. A service control unit, comprising: a memory, a processor, and a computer program stored in the memory and executable by the processor which, when executed by the processor, causes the processor to carry out the method for obtaining preset path information of any one of claims 7 to 10.

13. A computer-readable storage medium, storing computer-executable instructions which, when executed by a processor, cause the processor to carry out the method for obtaining preset path information of any one of claims 1 to 6, or the method for obtaining preset path information of any one of claims 7 to 10.
